Europäisches Patentamt

European Patent Office

Office européen des brevets

(11) Publication number: **0 303 214**
**A2**

## EUROPEAN PATENT APPLICATION

(21) Application number: 88112862.3

(51) Int. Cl.4: **G06F 15/72**

(22) Date of filing: 06.08.88

(30) Priority: **10.08.87 US 83400**

(43) Date of publication of application:
**15.02.89 Bulletin 89/07**

(84) Designated Contracting States:
**DE FR GB IT NL**

(71) Applicant: **HONEYWELL INC.**
**Honeywell Plaza**
**Minneapolis Minnesota 55408(US)**

(72) Inventor: **Thompson, E. J.**
**Route 1 Box 92M**
**Ruckersville, VA 22968(US)**

(74) Representative: **Rentzsch, Heinz et al**
**Honeywell Europe S.A. Holding KG Patent &**
**License Dept. Postfach 10 08 65**
**Kaiserleistrasse 39**
**D-6050 Offenbach am Main(DE)**

(54) **Color processor for digital map display system.**

(57) An apparatus for obtaining color values at arbitrary locations on the face of an electronic display (36) having a memory means (14) for providing color values at predetermined locations. A neighborhood of data points surrounding the arbitrary location is processed by a bilinear interpolator (18, 22, 26) operating on the scalar differences of the predetermined data points and the arbitrary location of the desired data point. This system provides for continuous processing without interruption of the data flow while the interpolation process proceeds.

FIG. 4.

## COLOR PROCESSOR FOR DIGITAL MAP DISPLAY SYSTEM

The invention relates to real time generation of moving map displays, and more particularly to an apparatus for generating color values at arbitrary points on the display between defined displayable picture elements.

A display system dedicated to real time map generation provides a moving display representative of the terrain below an airborne observation point. Typically such a map display on a cathode ray tube is required to generate a 240 horizontal by 240 vertical picture element (pixel) resolution map image. Additionally, the map generator may be required to rotate and zoom magnify the image. Representative performance requires zooming between several intermediate states requiring 1:1 and 2:1 enlargement.

To avoid visible flicker, the map image must be updated at a minimum of 20 times per second. Further, since the display data is dynamically changing, and a real time display is required, internal operations of the system must occur at a very fast rate. Video processing must occur at almost the same rate that data can be transferred from one location to another. Further, in order to minimize utilization of large memory banks, it is preferable for functions to be performed with dedicated hardware.

A problem that arises in rotating or zooming an image is that the relatively low 240 x 240 pixel resolution results in a grainy ragged edged appearance to the image. This is because color values are defined only at integer pixel locations on the display face of the cathode ray tube.

A digital map display system typically employs a map data base stored as an X-Y array of elevations. The terrain elevation is sampled at constant measured intervals. These intervals may be fixed linear distances, such as yards or miles, or fixed angular measurements. Each elevation zone is displayed as a predetermined color. When a particular picture element is displayed on the face of a cathode ray tube, the map data base is searched at the corresponding X-Y elevation location and a predetermined color is displayed.

Monochrome digitized images are readily generated as an X-Y array of intensity values, defined only for the integer X and Y address locations. However, there exist times in computer graphics displays and image processing when it is desired to display a data point between the defined locations. One method for commputing the intensity at such an undefined location is via bilinear interpolation. This process is described by Rosenfeld and Kak in Digital Picture Processing, 2nd Ed., Vol. 2, Page 33-36, Academic Press, N.Y. The process of bilinear interpolation permits a simple mathematical scaling of light intensity values corresponding to differences in the location of the undefined point with respect to the predetermined X and Y address locations. Bilinear interpolation is ideal for implementation in electronic hardware because it can be performed simply by three sequential linear interpolations.

Many different color models for computer graphics displays have been utilized, including the red-green-blue (RGB) primary color system and the hue-intensity-saturation (HIS) system. The HIS system used in a pseudocolor format, in which predetermined colors are assigned to designated elevation zones, has been adopted for use in the present invention. However, the bilinear interpolation operation discussed above is defined for arrays of related scalar values. The HIS data format does not lend itself to bilinear interpolation, because in the pseudocolor format the color displayed at a value of 5 can be totally unrelated to the color displayed at a value of 6. For example, 5 may stand for low intensity green and 6 may stand for high intensity red. Therefore, it is meaningless to extrapolate or interpolate intermediate values.

What is required is an apparatus for processing color data which permits interpolating color values between predefined display locations. The present invention as characterized in claim 1 permits synthesizing a color display into its primary color components and performs a bilinear interpolation on each of the components simultaneously, whereupon when combined there is provided a graduated range of color values useful for a digital map display. Preferred embodiments and details are described in the dependent claims.

In accordance with the present invention, color data originally in HIS format is processed by bilinear interpolation for display in RGB format. An array of digital data signals which represent a plurality of displayable points of illumination at integer locations on the display face of an electronic display are provided. A look up-table is programmed with primary color values corresponding to each of the displayable picture elements. The look up-table provides outputs in red, green, and blue digital data format.

Each primary color is individually processed by examining the fractional displacement of an arbitrary location to be displayed with respect to the predetermined array of digital data signals The color values of displayable picture elements adjoining the arbitrary point are linearly scaled to provide a further primary color value corresponding to the fractional displacement of the point to be defined with respect to the integer data point locations. For explaining the invention reference is made to the drawings in which:

Fig. 1 shows an array of displayable pixels in relation to an arbitrary point to be displayed.

Fig.2 shows how fractional color values are interpolated with respect to displayable pixels

Fig.3 shows a portion of a ROM data table

Fig.4 is a conceptual block dragram of the present invention.

Fig.5 is a schematic block dragram showing the bilinear interpretation circuit of the present invention.

Fig.6 is a timing dragram showing waveforms at various points of Figure 5.

## DESCRIPTION OF THE PREFERRED EMBODIMENT

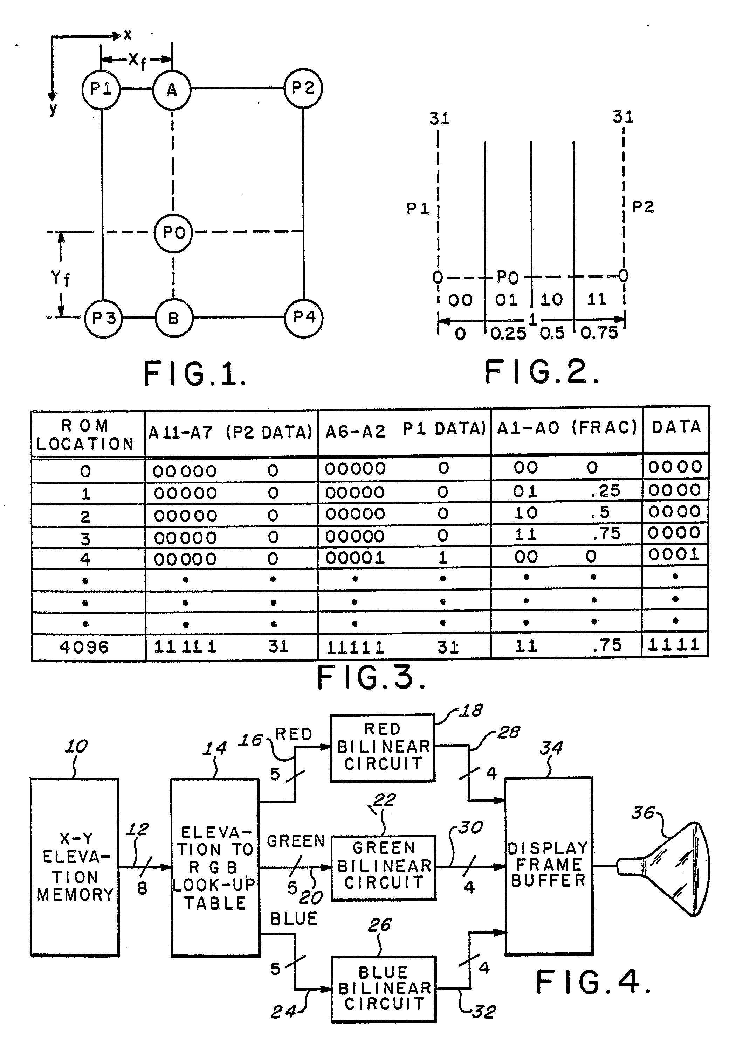

With reference to Figure 1, an initial address P0 (X, Y) is computed, corresponding to the location of a desired display pixel. Both an X address and a Y address must be provided to define a point on the map display. While the addresses in general will have both an integer and a fractional part, the memory array contains data only at integer locations in order to minimize the required data storage. The fractional part is truncated and elevation X-Y data is supplied from the external memory in the form of four neighboring locations P1, P2, P3, and P4. A new data point which is representative of the integer location is stored in a further memory array and termed P1. The address for point P2 is created from P1 by holding Y constant and adding 1 to X. Point P3 is created from point P2 by adding 1 to Y and subtracting 1 from X. Finally, point P4 is created from point P3 by adding 1 to X. As these are all integer operations they may be performed at a very fast rate by simple adders or bidirectional counters. A new point P0$'$ is then computed by the address generation circuit and the above operation is repeated to obtain four points about the new P0$'$.

Each point P1, P2, P3, and P4 has associated with it a predetermined color value. These four points will be processed by the bilinear interpolation circuit to be described to compute one data value-that of P0.

Bilinear interpolation is performed as follows. With continued reference to Figure 1, an intermediate point A corresponding to the fractional distance $X_f$ between point P0 and point P1 is synthesized by linearly interpolating between points P1 and P2. For a normalized coordinate measurement, the distance between P1 and P2 is one. The value for point A is therefore $(P2 - P1)(X_f)$. Point B is synthesized in a similar manner from P3 and P4, and is found by $(P4 - P3)(X_f)$. Finally, P0 is determined by linearly interpolating between point A and point B using the fraction $Y_f$. The value for P0 is found as $(A - B)(Y_f)$. The value for P0 thus derived represents a color value proportional to its position relative to the surrounding neighborhood of points. Only three sequential linear interpolations are required.

In order to minimize memory requirements, the fractional distances are quantized into four regions. Referring now to Figure 2, a unit distance 1 represents the displacement between points P1 and P2. This distance is divided into four equal increments. Each increment can be represented by a two-bit binary number. Similarly, color values, here representative of intensity for a fixed hue and saturation, range from 0 to 31, and may be represented by a five-bit binary number.

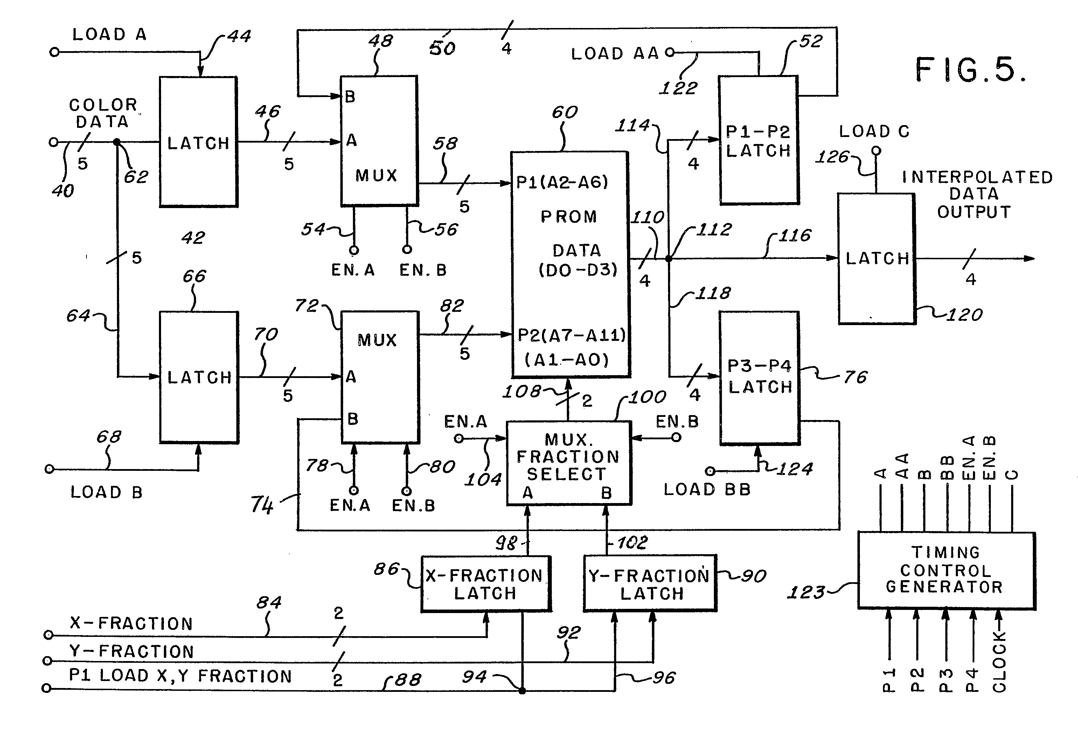

Referring now to Figure 4, an X-Y elevation memory 10 provides an eight-bit address on line 12 to a look- up table 14. Look-up table 14 is organized to provide red, green, and blue color values corresponding to the locations addressed on line 12 to red, green, and blue bilinear computation circuits. As noted above, while a composite color cannot be represented in bilinear interpolation format, red, green, and blue data outputs may each be considered an independent scalar quantity. Working in red, green, and blue is essential to the bilinear interpolation. The look-up table 14 provides a five-bit color value for red on bus 16 to red bilinear circuit 18. Bus 20 provides a five-bit color value to green bilinear circuit 22. Bus 24 provides a five-bit color value to blue bilinear circuit 26. It will be clear to those skilled in the art while a five-bit color value has been used, this is exemplary and not to be considered limiting, since the concept may be extendable to shorter or longer bit definitions in accordance with the accuracy desired. Data outputs of the red, green, and blue bilinear circuits are processed to provide a four-bit fractional color output and coupled on busses 28, 30, and 32 to a display frame buffer 34, where the signals are temporarily stored while other processing activities continue, and are then applied to a CRT 36.

Figure 5 shows the elements of the bilinear interpolation circuit. It is comprised of seven latches, three two-position multiplexers, and a programmable read only memory, programmed with a linear interpolater function. Color data from the look-up table 14 is applied on bus 40 to a latch 42. Latch 42 also receives a timing signal for loading the color data on line 44 from a timing control generator 123. The output of latch 42 is coupled on bus 46 to provide a five-bit data output to one input of multiplexer 48. A second input to multiplexer 48 is furnished on bus 50 from a latch 52. Timing signals on lines 54 and 56 are used to select the desired input to multiplexer 48. The output of multiplexer 48 is coupled on bus 58 to the PROM 60. The color data is also coupled at node 62 and bus 64 to a latch 66. Latch 66 is loaded by a signal on line 68. The output of latch 66 is coupled on bus 70 to a second multiplexer 72. A second input to multiplexer 72 is coupled on bus 74 from a latch 76. Signals on lines 78 and 80 are applied to multiplexer 72 to select one of the two input signals. The five-bit output of multiplexer 72 is coupled on bus 82 to the PROM 60. The computed value of the X fraction is applied on bus 84 to an X-fraction latch 86. A timing signal to load the X and Y fractions is applied on line 88. A further latch 90 receives a signal corresponding to the Y-fraction on bus 92 and a load signal for the Y-fraction coupled at node 94 and line 96. The output of latch 86 is applied on line 98 to a third multiplexer 100. The output of latch 90 is applied on line 102 to a second input of multiplexer 100. Multiplexer 100 also receives timing signals to select one of the two inputs A or B on lines 104 and 106 respectively. The selected output of multiplexer 100, which is representative of the X or Y-fraction data, is applied on line 108 to the PROM 60. The output of PROM 60 is applied as a four-bit data word on bus 110 where it is distributed via node 112 and busses 114, 116, and 118 to latches 52, 76, and a further latch 120. Latches 52, 76, and 120 receive timing signals on lines 122, 124, and 126 respectively. The output of latch 120, which is representative of the interpolated data output, is a four-bit data word corresponding to the color value of point P0. The interpolated data output is applied to the display frame buffer 34.

The linear interpolater 60 may be comprised of a single integrated circuit, such as a PROM organized to store 16384 bits arranged as 4096 words of four bits each. The storage locations are addressed by 12 pins, A0 through A11. The address lines are used as the data inputs and the data stored at the addressed location is the data output. Address lines A0 and A1 are used to provide the fractional values. The P1 data value is applied to address lines A2 through A6 and P2 data value is applied to lines A7 through A11. This is shown in Figure 3. Figure 3 shows how the address lines to the PROM 60 are utilized as data value inputs. For example, a binary value 11 applied to address lines A0 and A1, representative of a fractional value of 0.75, a binary value of 00000 applied to address lines A2 through A6, representative of P1 data, and a binary value of 00000 applied to address lines A7 through A11, representative of P2, will command the data stored in ROM location 3, which provides a binary data output 0000. This same table may be used for interpolation of the data values for P3 and P4 because of the symmetry of the memory array.

In operation, each of the primary colors is processed by a separate bilinear interpolation circuit similar to Figure 5. The outputs of the bilinear circuits are the red, green, and blue digital words which describe the color value to be assigned point P0. Since individual bilinear circuits are required for each of the primary colors, and four data points are required for each color value, this results in 12 digital data values: P1 (R-G-B), P2 (R-G-B), P3 (R-G-B), and P4 (R-G-B). Each bilinear interpolation circuit receives its four color data values plus the $X_f$ and $Y_f$ fractional parts of the address of P0, the original data point. While two bits of fractional address are shown here to exemplify the quantitization of the interior regions into four positions, the circuit is readily expandable to three bits for increased accuracy, using an 8K x 8 PROM 60 thereby permitting a 5-bit throughout.

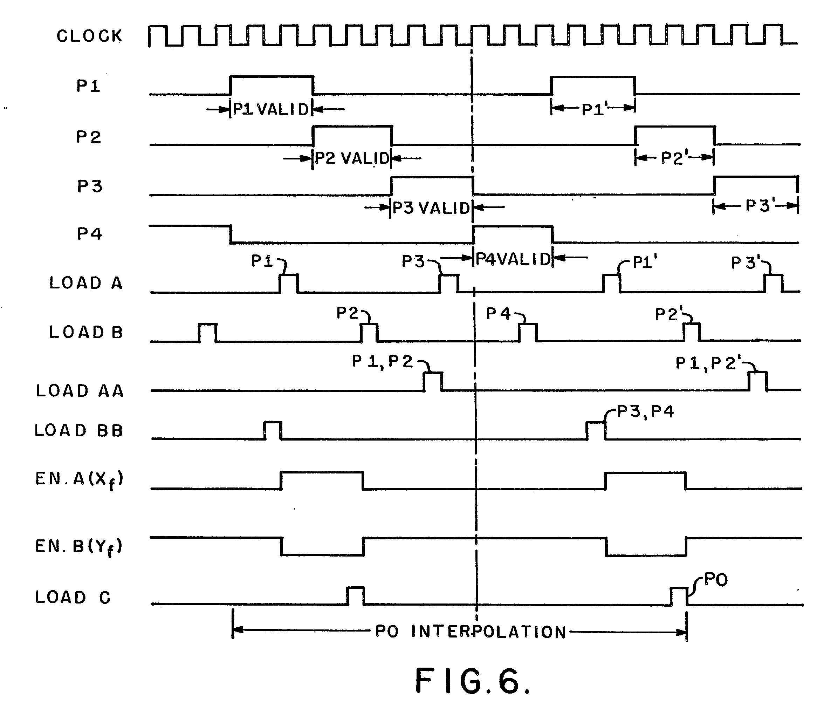

Referring now to Figure 6, with continued reference to Figure 5, the flow of data will be explained. while only a single color is illustrated, the same process applies for each of the primary colors.

A signal from timing source 123 provides regular clock pulses for synchronizing the action of the various circuit elements. Color data for point P1 is stabilized and available during the period denoted as "P1 valid." The signal Load A at the point denoted by P1 provides a signal on line 44 to load latch 42 with P1 color data. Simultaneously, X-fraction data on bus 84 and Y-fraction data on bus 92 are loaded into latches 86 and 90, respectively. The P1 color data is the five-bit binary value of the primary component of the point P1. Similarly, color data for points P2, P3, and P4 are loaded during the periods noted as P4 valid shown on Figure 6.

The operation of the circuit of Figure 5 is as follows. Timing control generator 123 receives inputs P1, P2, P3, P4, and a clock signal. In a conventional manner, the timing control generator is so constructed and arranged to provide periodic outputs having the waveforms shown in Figure 6. The timing generator sequentially loads the respective latches and selects appropriate inputs of the various multiplexers. A color data signal P1 is applied on bus 40 to latch 42 and loaded by the signal Load A on line 44. Simultaneously, latches 86 and 90 are loaded by the X-fraction and Y-fraction signals applied on bus 84 and bus 92. After loading signal P1, signal P2 is applied to bus 40 and loaded into latch 66 by the signal Load B on line 68. The signal EN.A on line 104 then transfers the X-fraction signal in latch 86 via line 98 to multiplexer 100 and address terminals A1-A0 of PROM 60. The signal EN.A applied to multiplexers 48 and 72 provides a color signal P1 on bus 58 to address terminals A2-A6 of PROM 60. Color signal P2 is loaded on bus 82 into terminals A7-A11 of PROM 60. The applied address signals determine the corresponding output data on bus 110 which is loaded into latch 52 by the signal Load AA.

Color signal P3 is then applied via bus 40 to latch 42 and loaded by the signal on line 44. This is followed sequentially by signal P4 which is applied to bus 40 and loaded into latch 66 by signal Load B on line 66. Multiplexers 48 and 78 are in a state such that the output from latches 42 and 66 are correspondingly applied to address input lines A2-A6 and A7-A11 of PROM 60. The data output on lines D0-D3 is applied via bus 110 and 118 to latch 76 and loaded by signal Load BB on line 124. Latch 52 is loaded with the interpolated results of P1, P2, and the X-fraction and latch 76 is loaded with the interpolated results of P3, P4, and the X-fraction. At this point in time, all the multiplexers change state, denoted by signal EN.A changing from a logic low to a logic high and signal EN.B changing from a logic high to a logic low. The Y-fraction signal stored in latch 90 is now routed via line 102 to multiplexer 100 and bus 108 to address lines A1-A0 of the interpolation PROM 60. The input data multiplexers 48 and 72 now feed P1, P2 output data from latch 52 via bus 50 and P3, P4 data from latch 76 via bus 74 to address lines A2-A6 and A7-A11, respectively, of PROM 60. After a short period of time, the valid interpolation values of P1, P2 and P3, P4 are stored into output latch 120 by the signal Load C. The signal stored in latch 120 is the interpolated data output representative of signal P0. The multiplexers are returned to the original states and the process repeats with the next set of data values $P1'$, $P2'$, $P3'$, and $P4'$.

The interpolated values of P1, P2 and P3, P4 are held respectively in dedicated latches 52 and 76, and the input latches 42 and 66 are isolated via input multiplexers 48 and 72 when performing the P1,P2-P3,P4 interpolation. The system then receives the next valid $P1'$ and $P2'$ color values while the final interpolation value settles through the PROM. This process allows an overlap of data fed from the memories and the interpolation circuits, so that the interpolation circuits may operate without wait states. Figure 6 shows the general timing of a complete interpolation cycle and a portion of the following cycle with the overlap of operation. The red, green, and blue interpolation circuits operate in parallel.

While the invention has been shown with latches and multiplexers for clarity of understanding, it will be clear to one skilled in the art that the same result may be utilized by a latch and a tristate buffer or other equivalent logic circuits.

## Claims

1. Apparatus for deriving a color value and providing a plurality of displayable points of illumination at arbitrary points on the face of an electronic display, **characterized by**

a) lookup table means (14) responsive to an array of digital data signals (10) representative of a plurality of predetermined integer locations on said display face for providing primary color values corresponding thereto,

b) said lookup table means (14) further responsive to ones of said digital data signals corresponding to a given number of predetermined locations (P1 to P4) surrounding at least one of said arbitrary points (P0) not coinciding with one of said integer locations, each of said predetermined integer locations representative of a displayable point of illumination and a predetermined primary color value,

c) said lookup table means still further responsive to a source of fractional difference data signals (84, 92) corresponding to the relative locations of said arbitrary point and said surrounding points for generating primary color values corresponding thereto,

d) switching means (48, 72, 100) for sequentially applying pairs of said signals corresponding to said surrounding locations and one of said signals corresponding to said fractional difference to address said lookup table means for linearly scaling differences in color value between said predetermined locations and said arbitrary location and for deriving a primary color value corresponding to said arbitrary location and proportional to said differences, and

e) means (34) coupled to receive said derived primary color values for controlling said electronic display (36) in accordance therewith.

2. The apparatus according to claim 1, **characterized in that**

a) said predetermined locations correspond to integer displacements with respect to first and second displayable locations, and

b) said first and second displayable locations correspond to fractional displacements ($X_f$, $Y_f$) with respect to said arbitrary location.

3. The apparatus according to claim 2, **characterized in that** said predetermined locations correspond to integer X and Y coordinate positions (P1, P2, P3, P4), said coordinates comprising orthogonal linear axes.

4. The apparatus according to claim 3, **characterized in that** said color values of said displayable locations correspond to coordinate positions

P1 (X, Y) = $(X_1, Y_1)$, P2 (X, Y) = $(X_1 + 1, Y_1)$,

P3 (X, Y) = $(X_1, Y_1 + 1)$, P4 (X, Y) = (X, + 1, Y_1

+ 1) respectively, and said arbitrary location has a color value P0 corresponding to an integer component and a fractional component, said integer component locating said value P0 within the region defined by said values P1, P2, P3, and P4 and said fractional component representative of a scalar fractional color difference between said integer coordinate positions along said x and Y coordinate axes.

5. The appratus according to Claim 4, **characterized by:**

a) means (16, 20, 24) for providing red, green, and blue primary color values at each of said displayable locations surrounding said further location, corresponding to said coordinate positions P1, P2, P3 and P4 and

b) means (18, 22, 26) for deriving color values corresponding to said red, greent, and blue primary color values at said further location corresponding to coordinate position P0.

6. The apparatus according to one of the preceding claims, **characterized by:**

a) means (42, 66) for storing color values in digital form corresponding to said ones of said predetermined locations surrounding said further location,

b) means (80, 90) for storing fractional values in digital form corresponding to differences in location between said predetermined location and said further location,

c) memory means (60) having a plurality of addressable storage locations, each of said storage locations having a predetermined color value represented by a digital word stored therein, and

d) means (58, 82) for applying said digital color values and said digital fractional values to address said memory means (60), thereby to provide a digital output representative of a color value corresponding to said further location and proportional to differences between color values of said predetermined locations and the relative locations of said predetermined locations and said further location.

7. The apparatus according to Claim 6, **characterized in that** said means for storing color values comprises first and second latch means (42, 66).

8. The apparatus according to Claim 7, **characterized in that** said means for storing fractional values comprises third latch means (86) for storing a fraction representative of differences along said X coordinate axis and fourth latch means (90) for storing a fraction representative of differences along said Y coordinate axis.

9. The apparatus according to Claim 7 or 8, further comprising means (52, 76) for storing said digital output of said memory means (60).

10. The apparatus according to Claims 8 and 9, **characterized in that** said means for storing digital output further comprises fifth latch means (52) for providing a first digital signal to first switch means (48), said first switch means also responsive to a second digital signal from said first latch means (42) and to a timing signal (54, 56) for controllably selecting said first or second digital signals in accordance with said timing signal and for providing said selected signal (58) to address said memory means (60).

11. The apparatus according to Claim 10, **characterized by** second switch means (100) responsive to first and second digital signals from said means for storing fractional values (86, 90) and to a further timing signal (103, 64) for controllably selecting said first or second signals applied to said second switch means in accordance with said timing signal and for providing said selected signal (108) to address said memory means (60).

12. Apparatus for deriving primary color values for a displayable picture element at an arbitrary location on the display face of an electonic display, wherein said arbitrary location is surrounded by a plurality of displayable picture elements at predetermined integer locations and having predetermined primary color values, **characterized by:**

a) memory means (60) having a plurality of addressable storage locations, each of said storage locations having a predetermined primary color value represented by a digital word stored therein,

b) means (44, 48, 66, 72) responsive to a source of digital signals representative of said plurality of displayable picture elements for storing and sequentially selecting a plurality of pairs of color elements corresponding to color values P1, P2, P3 and P4, said color values corresponding to displayable picture elements having coordinate addresses $(X_1, Y_1)$, $(X_1 + 1, Y_1)$, $(X_1, Y_1 + 1)$, and $(X_1 + 1, Y_1 + 1)$ respectively, said color elements surrounding an arbitrary location $X_0, Y_0$ having a color value P0,

c) means responsive to a source of digital signals representative of first and second fractional differences between said coordinate addresses corresponding to said plurality of displayable picture elements and a coordinate address corresponding to the location $X_0, Y_0$ of said displayable picture element at an arbitrary location, said coordinate addresses corresponding to predetermined integral coordinate positions of said displayable picture elements and said difference comprising fractional intervals of said integral coordinate positions, with respect to said arbitrary location, for storing and sequentially selecting first or second fractional differences, and

d) means (58, 82) for applying said digital signals P1, P2, P3 and P4 to address said memory means, thereby to derive a first algebraic difference of said color values P2 and P1, a second algebraic difference of said color values P4 and P3 and for applying said first fractional difference corresponding to an X coordinate and said second fractional difference corresponding to a Y coordinate so that a color value P0 is obtained corresponding to said picture element at an arbitrary location.

13. The apparatus according to Claim 12, **characterized in that** said memory means (60) is programmed so that said first algebraic difference is multiplied by said first fractional difference to obtain a first product, said second algebraic difference is multiplied by said first fractional difference to obtain a first product, said second algebraic difference is multiplied by said first fractional difference to obtain a second product, and a difference of said first and second products is multiplied by said second fractional difference to obtain a third product which is representative of a scalar interpolation between color values P1, P2, P3 and P4 to obtain said color value P0

## FIG.1.

## FIG.2.

| ROM LOCATION | A11-A7 (P2 DATA) | | A6-A2 P1 DATA) | | A1-A0 (FRAC) | | DATA |
|---|---|---|---|---|---|---|---|
| 0 | 00000 | 0 | 00000 | 0 | 00 | 0 | 0000 |
| 1 | 00000 | 0 | 00000 | 0 | 01 | .25 | 0000 |
| 2 | 00000 | 0 | 00000 | 0 | 10 | .5 | 0000 |
| 3 | 00000 | 0 | 00000 | 0 | 11 | .75 | 0000 |
| 4 | 00000 | 0 | 00001 | 1 | 00 | 0 | 0001 |
| • | • | • | • | • | • | • | • |
| • | • | • | • | • | • | • | • |
| • | • | • | • | • | • | • | • |
| 4096 | 11111 | 31 | 11111 | 31 | 11 | .75 | 1111 |

## FIG.3.

## FIG.4.

FIG.5.

EP 0 303 214 A2

FIG.6.

EP 0 303 214 A2